# EUROPÄISCHE PATENTSCHRIFT

(11) **EP 0 937 229 B1**
(45) Veröffentlichungstag und Bekanntmachung des Hinweises auf die Patenterteilung: **01.12.2004**
(21) Anmeldenummer: 98951246.2
(22) Anmeldetag: 01.09.1998
(51) Int. Cl.: G01B 11/30, G01B 9/02

(54) **INTERFEROMETRISCHE MESSVORRICHTUNG ZUR FORMVERMESSUNG AN RAUHEN OBERFLÄCHEN**
INTERFEROMETRIC MEASURING DEVICE FOR FORM MEASUREMENT ON ROUGH SURFACES
DISPOSITIF DE MESURE INTERFEROMETRIQUE POUR LE MESURAGE DE FORMES SUR DES SURFACES RUGUEUSES

(30) Priorität: 05.09.1997 DE 19738900
(43) Veröffentlichungstag der Anmeldung: 25.08.1999
(73) Patentinhaber: ROBERT BOSCH GMBH, 70442 Stuttgart (DE)
(72) Erfinder: DRABAREK, Pawel, D-75233 Tiefenbronn (DE)
(86) Internationale Anmeldenummer: PCT/DE1998/002564
(87) Internationale Veröffentlichungsnummer: WO 1999/013294

(56) Entgegenhaltungen:
- EP-A- 0 108 497
- EP-A- 0 983 483
- GB-A- 2 277 588

## Beschreibung

### Stand der Technik

Die Erfindung bezieht sich auf eine interferometrische Meßvorrichtung zur Formvermessung an rauhen Oberflächen eines Meßobjekts mit einer Strahlungserzeugungseinheit, die eine kurzkohärente Eingangsstrahlung abgibt, mit einer Strahlteilervorrichtung, zum Bilden eines Referenzstrahls, der auf eine Vorrichtung mit einem reflektierenden Element zum periodischen Ändern des Lichtwegs gerichtet ist, und eines Meßstrahls, der auf das Meßobjekt gerichtet ist, mit einem Überlagerungselement, an dem der von dem Meßobjekt und der von der Vorrichtung kommende Referenzstrahl zur Interferenz gebracht werden, und mit einem Photodetektor, der die interferierte Strahlung aufnimmt und einer Auswerteeinrichtung zuführt.

Eine interferometrische Meßvorrichtung dieser Art ist in der Veröffentlichung T. Dresel, G. Häusler, H. Venzke "Three-dimensional sensing of rough surfaces by coherence radar, App. Opt., Vol. 3, No. 7 vom 1.3.1992 als bekannt ausgewiesen. In dieser Veröffentlichung wird ein Interferometer mit kurzkohärenter Lichtquelle und piezobewegtem Spiegel zur Formvermessung an rauhen Oberflächen vorgeschlagen. In der Meßvorrichtung wird ein erster Teilstrahl in Form einer Referenzwelle einem weiteren Teilstrahl in Form eines Meßstrahls, der von einem Meßobjekt zurückgestrahlt ist, überlagert. Die beiden Lichtwellen haben eine sehr kurze Kohärenzlänge (einige µm), so daß der Interferenzkontrast ein Maximum erreicht, wenn die optische Wegdifferenz null ist. Zum Ändern des Lichtwegs der Referenzwelle ist das reflektierende Element in Form des piezobewegten Spiegels vorgesehen. Durch den Vergleich der Lage des piezobewegten Spiegels mit der Zeit des Auftretens des Interferenzmaximums, läßt sich der Abstand zum Meßobjekt bestimmen. Dabei können sich Schwierigkeiten in der genauen Erfassung des Interferenzmaximums und in dessen Zuordnung zu dem Lichtweg ergeben, da die eindeutige Lageerfassung des piezobewegten Spiegels aufwendig ist.

Der Erfindung liegt die Aufgabe zugrunde, eine interferometrische Meßvorrichtung der eingangs genannten Art bereitzustellen, mit der der Aufbau vereinfacht und eine hohe Meßgenauigkeit erzielt wird.

Diese Aufgabe wird mit den Merkmalen des Anspruchs 1 gelöst. Hiernach ist also eine Modulations-Interferometeranordnung vorgesehen, die derart aufgebaut ist, daß mit einem ersten Strahlteiler der Strahlteilervorrichtung außer dem Referenzstrahl ein zweiter Teilstrahl gebildet wird, daß die Vorrichtung zum Ändern des Lichtwegs eine zumindest im Strahlengang des Referenzstrahls angeordnete parallelverschiebende Anordnung und das reflektierende Element ein Retrogitter ist, daß im Strahlengang des Referenzstrahls vor der parallelverschiebenden Anordnung ein Kompensationsgitter angeordnet ist, an dem der Referenzstrahl sowohl vor als auch nach dem Durchgang durch die parallelverschiebende Anordnung gebeugt wird, daß im Strahlengang des zweiten Teilstrahls ein gleiches Paar wie im Strahlengang des Referenzstrahls aus einemweiteren Kompensationsgitter und einem diesem nachgeordneten weiteren Retrogitter angeordnet ist, wobei die optischen Weglängen der so gebildeten beiden Arme für den Referenzstrahl und den zweiten Teilstrahl der Modulations-Interferometeranordnung eine Differenz größer als die Kohärenzlänge aufweisen, und daß der über das Kompensationsgitter zurückgeführte Referenzstrahl und der über das weitere Kompensationsgitter zurückgeführte zweite Teilstrahl zu einem Zwischenstrahl zusammengeführt werden, und daß eine Demodulations-Interferometeranordnung vorgesehen ist, die derart aufgebaut ist, daß der Zwischenstrahl in zwei weitere Arme der Demodulation-Interferometeranordnung mittels eines weiteren Strahlteilers aufgeteilt wird, wobei der eine Arm von einem Spiegel und der andere Arm von der Oberfläche des Meßobjekts abgeschlossen ist und die beiden weiteren Arme die gleiche Wegdifferenz aufweisen wie die Arme der Modulations-Interferometeranordnung, und daß die an dem Spiegel und der Oberfläche des Meßobjekts zurückgelenkten Strahlen an dem Überlagerungselement zur Interferenz gebracht werden.

Mittels der parallelverschiebenden Anordnung und des reflektierenden Elements in Form des Retrogitters wird eine Änderung des Lichtwegs ohne mechanisch bewegte Teile erzielt, wie in der nicht vorveröffentlichten Deutschen Patentanmeldung 197 21 842.3 ausgeführt. Durch das Kompensationsgitter im Strahlengang des Referenzstrahls wird eine Kompensation der räumlichen Dekohärenz der Wellenfronten und der durch die unterschiedlichen Wellenlängen zum Erreichen der kurzen Kohärenzlänge bedingten Winkeldispersion erzielt, wie in der ebenfalls nicht vorveröffentlichten Deutschen Patentanmeldung 197 21 884.9 bzw. EP-A-0 983 483 angegeben. Die Anwendung des Kompensationsgitters im Strahlengang des Referenzstrahls allein verursacht eine weitere Dispersion, die mit dem Abstand zwischen dem Retrogitter und dem Kompensationsgitter zunimmt. Mittels des in der Modulations-Interferometeranordnung ausgebildeten zweiten Arms mit einem gleichen Retrogitter und Kompensationsgitter wie in dem Arm des Referenzstrahls und dem angegebenen Aufbau der Demodulations-Interferometeranordnung wird diese zusätzliche Dispersion kompensiert und zusätzlich eine Trennung zwischen dem relativ großen Aufbau der Modulations-Interferometeranordnung und der relativ kompakten, als Meßsonde miniaturiesierbaren Demodulations-Interferometeranordnung realisiert, so daß die Meßvorrichtung auch leicht handhabbar ist.

Für einen einfachen Aufbau und eine einfache Ansteuerung der Meßvorrichtung sind die Maßnahmen günstig, daß die parallelverschiebende Anordnung eine im Strahlengang angeordnete akustooptische Deflektoreinrichtung aufweist, und daß die Deflektoreinrichtung frequenzmoduliert angesteuert ist und in bezug auf den ankommenden Referenzstrahl sowie auf das Refeixionsgitter derart angeordnet ist, daß der zu dem Überlagerungselement geführte Referenzstrahl durch seine Ablenkung in der Deflektoreinrichtung die Änderung seines Lichtwegs erfährt. Hierdurch kann der Lichtweg in genau definierter Weise einfach verändert und das Interferenzmaximum in Abhängigkeit des Lichtwegs eindeutig bestimmt werden.

Ist vorgesehen, daß die Gitterkonstante des Kompensationsgitters und des zweiten Kompensationsgitters zweimal so groß ist wie die Gitterkonstante des Retrogitters bzw. des weiteren Retrogitters, so werden die Winkeldispersion und die räumliche Dekohärenz der Wellenfronten besonders gut beseitigt.

Zur Kompensation der räumlichen Dekohärenz ist weiterhin die Maßnahme vorteilhaft, daß das Kompensationsgitter und das Retrogitter sowie das weitere Kompensationsgitter und das weitere Retrogitter jeweils parallel zueinander angeordnet sind.

Der Aufbau wird weiterhin dadurch vereinfacht, daß die Kompensationsgitter reflektierend ausgebildet sind, daß im Strahlengang des Referenzstrahls und des zweiten Teilstrahls zwischen dem ersten Strahlteiler und den Kompensationsgittern jeweils ein Spiegel angeordnet ist, mit dem der Referenzstrahl bzw. der zweite Teilstrahl auf dem Hinweg auf das zugehörige Kompensationsgitter und auf seinem Rückweg auf den Strahlteiler gerichtet ist, der den Zwischenstrahl erzeugt, und dadurch, daß der weitere Strahlteiler gleichzeitig das Überlagerungselement bildet.

Für die einfache Handhabung ist günstig vorgesehen, daß die Demodulations-Interferometeranordnung über einen Lichtleiter mit der Modulations-Interferometeranordnung gekoppelt ist.

Eine flächenhafte Auswertung wird dadurch ermöglicht, daß der Zwischenstrahl am Eingang der Demodulations-Interferometeranordnung durch eine Fernrohranordnung zu einem breiten Lichtstrahl aufgeweitet wird und daß der Photodetektor als CCD-Kamera ausgebildet ist.

Für die Meßwerterfassung und Steigerung der Meßgenauigkeit ist vorgesehen, daß ein Aufbau für eine an sich bekannte heterodyn-interferometrische Auswertung vorhanden ist, wobei eine Einrichtung zur Frequenzverschiebung zwischen den interferierenden Strahlen vorgesehen ist.

Ein vorteilhafter Aufbau für eine einfache Meßanordnung besteht darin, daß die parallelverschiebende Anordnung nur in dem den Referenzstrahl führenden Arm der Modulations-Interferometeranordnung angeordnet ist.

Um auch die Modulations-Interferometeranordnung kompakt auszubilden, besteht ein weiterer vorteilhafter Aufbau darin, daß die parallelverschiebende Anordnung in beiden Armen der Modulations-Interferometeranordnung derart angeordnet ist, daß sie sowohl auf dem Hinweg als auch auf dem Rückweg von dem Referenzstrahl und von dem zweiten Teilstrahl durchlaufen wird. Dieser Aufbau wird weiterhin dadurch vereinfacht, daß das Retrogitter für den Referenzstrahl und das weitere Retrogitter für den zweiten Teilstrahl so gekippt sind, daß die gleichzeitige Verschiebung des Referenzstrahls und des zweiten Teilstrahls eine gegenläufige Modulation ihrer Laufzeit bewirkt, und daß die beiden Retrogitter so angeordnet sind, daß für den Referenzstrahl und den zweiten Teilstrahl die optische Wegdifferenz entsteht.

Dabei besteht eine günstige Anordnung für eine heterodyn-interferometrische Auswertung darin, daß zwischen den beiden Kompensationsgittern und der parallelverschiebenden Anordnung jeweils ein akustooptischer Modulator angeordnet ist und daß die akustooptischen Modulatoren zum Erzeugen einer Frequenzverschiebung des Referenzstrahls des zweiten Teilstrahls mit geringfügig unterschiedlicher Frequenz mittels zugeordneter Modulator-Treiber angesteuert werden. Dabei kompensieren sich die beiden akustooptischen Modulatoren gegenseitig. Alternativ dazu kann auch nur ein akustooptischer Modulator eingesetzt werden in der Weise, daß nur ein akustooptischer Modulator in einem der beiden Arme der Modulations-Interferometeranordnung auf der den Retrogittern abgewandten Seite der parallelverschiebenden Anordnung vorgesehen ist.

Hinsichtlich der Wirkungsweise der heterodyn-interferometrischen Verfahren an sich wird auf die diesbezügliche Literatur verwiesen.

Die Erfindung wird nachfolgend anhand von Ausführungsbeispielen unter Bezugnahme auf die Zeichnungen näher erläutert. Es zeigen:
- Fig. 1: ein erstes Ausführungsbeispiel der interferometrischen Meßvorrichtung mit einer Modulations-Interferometeranordnung und einer nachgeschalteten Demodulations-Interferometeranordnung und
- Fig. 2: ein weiteres Ausführungsbeispiel für eine Modulations-Interferometeranordnung der Meßvorrichtung.

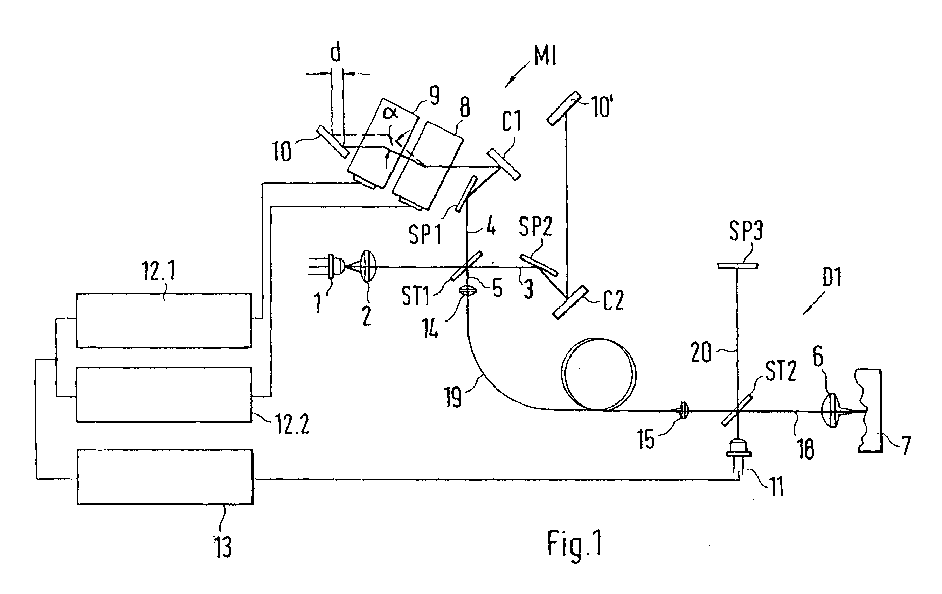

Die in Fig. 1 gezeigte interferometrische Meßvorrichtung weist als einen wesentlichen Bestandteil eine Modulations-Interferometeranordnung MI auf, in der eine zeitliche Wegdifferenz eines Referenzstrahls 4 erzeugt wird, sowie eine Demodulations-Interferometeranordnung DI, in der ein an der Oberfläche eines Meßobjekts 7 reflektierter Meßstrahl 18 mit dem Referenzstrahl 4 bzw. Bestandteilen desselben zur Interferenz gebracht und der interferierte Strahl einem Photodetektor 11 zugeführt wird.

Der Modulations-Interferometeranordnung MI wird von einer Lichtquelle 1 über einen Kollimator 2 ein Eingangsstrahl zugeführt, der mit einem ersten Strahlteiler ST1 in den Referenzstrahl 4 und einen zweiten Teilstrahl 3 aufgeteilt wird. Der Referenzstrahl 4 und der zweite Teilstrahl 3 durchlaufen zwei zugeordnete Arme der Modulations-Interferometeranordnung MI, wobei der Arm des Referenzstrahls 4 nacheinander angeordnet einen Spiegel SP1, ein Kompensationsgitter C1, eine parallelverschiebende Anordnung aus einem ersten und einem zweiten akustooptischen Deflektor 8,9 sowie ein Retrogitter 10 aufweist.

Die beiden akustooptischen Deflektoren 8,9 werden mittels Deflektor-Treibern 12.1,12.2 frequenzmoduliert angesteuert. Durch die Frequenzmodulation wird der Ablenkwinkel des Referenzstrahl 4 in dem ersten akustooptischen Deflektor 8 um einen Winkel *a* variiert. In dem zweiten akustooptischen Deflektor 9 wird der Referenzstrahl 4 anschließend wieder in die Richtung abgelenkt, in der er auf den ersten akustooptischen Deflektor 8 auftrifft. Auf diese Weise entsteht ein Parallelversatz des aus dem zweiten akustooptischen Deflektor 9 austretenden Referenzstrahls 4, der anschließend das Retrogitter 10 beleuchtet. Das Retrogitter 10 ist unter einem bestimmten Winkel so geneigt, daß der zurückgebeugte Referenzstrahl 4 unabhängig von dem Parallelversatz über die beiden akustooptischen Deflektoren 8,9, das Kompensationsgitter C1 und den Spiegel SP1 zu dem ersten Strahlteiler ST1 zurückläuft.

In dem zweiten Arm der Modulations-Interferometeranordnung MI sind im Strahlengang des zweiten Teilstrahls 3 nacheinander ein weiterer Spiegel SP2, ein weiteres Kompensationsgitter C2 sowie abschließend ein weiteres Retrogitter 10' angeordnet. Das Kompensationsgitter C1 und das weitere Kompensationsgitter C2 einerseits sowie das Retrogitter 10 und das weitere Retrogitter 10' andererseits sind gleich. Die optischen Längen beider Arme der Modulations-Interferometeranordnung MI sind ungleich mit einer Differenz, die wesentlich größer als die Kohärenzlänge der Lichtquelle 1 ist (z. B. einige mm).

Durch das Kompensationsgitter C1 wird eine gewisse Kompensation der räumlichen Dekohärenz der Wellenfronten und der Winkeldispersion, die durch die unterschiedlichen Wellenlängen des für die kurze Kohärenzlänge erforderlichen Lichts bedingt sind, erreicht. Die dabei jedoch verursachte zusätzliche Dispersion, die mit dem Abstand zwischen dem Retrogitter 10 und dem Kompensationsgitter C1 stark zunimmt, wird durch die entsprechenden Gitter des anderen Arms der Modulations-Interferometeranordnung MI kompensiert. Da die optischen Längen beider Arme ungleich sind interferieren der zurückkehrende Referenzstrahl 4 und der zweite Teilstrahl 3 am Ausgang der Modulations-Interferometeranordnung MI nicht.

Nachdem der Referenzstrahl 4 und der zweite Teilstrahl 3 an dem ersten Strahlteiler ST1 zusammengeführt sind, werden sie als Zwischenstrahl 5 über eine Linse 14 in einen Lichtleiter 19 geführt, an dessen Ausgang über eine weitere Linse 15 die Demodulations-Interferometeranordnung DI angeschlossen ist. In der Demodulations-Interferometeranordnung DI sind wiederum hinter einem zweiten Strahlteiler ST2 zwei Arme gebildet, in die die beiden aus dem Zwischenstrahl 5 gebildeten Teilstrahlen geleitet werden. Der eine Teilstrahl fällt als Meßstrahl 18 über eine Fokussierungslinse 6 auf die Oberfläche des Meßobjekts 7 und wird dort auf den zweiten Strahlteiler zurückreflektiert. Der andere Teilstrahl fällt auf einen dritten Spiegel SP3, von wo er ebenfalls auf den zweiten Strahlteiler ST2 zurückgeführt wird. Die beiden Arme der Demodulations-Interferometeranordnung DI, das z. B. wie die Modulations-Interferometeranordnung MI als Michelson Interferometer aufgebaut ist, haben die gleiche optische Wegdifferenz wie die Arme der Modulations-Interferometeranordnung MI. Aus diesem Grund interferieren die beiden an dem zweiten Strahlteiler zusammentreffenden Teilstrahlen in Form des Meßstrahls 18 und des anderen Teilstrahls 20. Der interferierte Strahl wird dem Photodetektor 11 zugeführt, der das Signalmaximum des Interferenzkontrasts, das durch die kurze Kohärenzlänge des von der Lichtquelle 1 abgegebenen Eingangsstrahls entsteht, erfaßt und einer Auswerteschaltung 13 zuführt. Durch den Vergleich des Zeitpunkts des Signalmaximums mit der momentanen Frequenz der Deflektor-Treiber läßt sich der Abstand zum Meßobjekt 7 und damit die Form der Oberfläche bestimmen, wie beispielsweise in der Deutschen Patentanmeldung 197 21 842 ausgeführt.

Dabei können durch die vorstehend beschriebenen Kompensationsmaßnahmen Lichtquellen mit kürzerer Kohärenzlänge verwendet werden, wodurch ein schärferes Signalmaximum erhalten wird, oder bei gleicher Kohärenzlänge kann ein verbesserter Kontrast erzielt werden.

In einer weiteren Ausgestaltung befindet sich am Eingang der Demodulations-Interferometeranordnung DI ein Fernrohr, mit dem der eintreffende Zwischenstrahl 5 aufgeweitet wird, um eine flächenhafte Messung durchzuführen. Bei dieser Anordnung ist der Photodetektor 11 als CCD-Kamera ausgebildet.

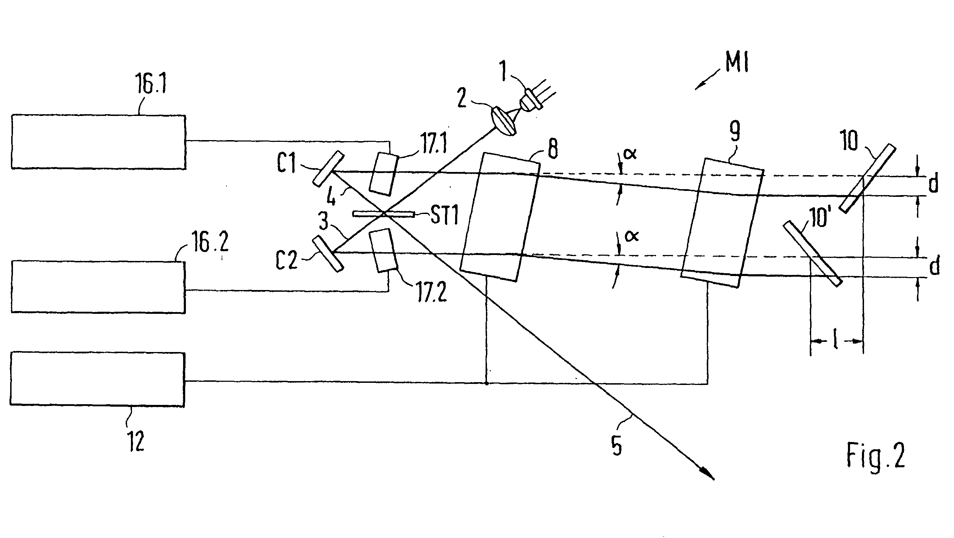

Fig. 2 zeigt ein weiteres Ausführungsbeispiel, wobei die Modulations-Interferometeranordnung MI kompakt aufgebaut ist und eine Verdoppelung der Amplitude der Laufzeitmodulation erzielt wird.

Bei der Anordnung gemäß Fig. 2 wird das Licht der kurzkohärenten Lichtquelle 1 mit dem Kollimator 2 kollimiert und mit dem ersten Strahlteiler ST1 in zwei Teilstrahlen aufgeteilt, die dem Referenzstrahl 4 und dem zweiten Teilstrahl 3 gemäß Fig. 1 entsprechen. Die beiden Teilstrahlen 3,4 werden getrennt in den beiden Kompensationsgittern C1 und C2 gebeugt und durchlaufen zwei akustooptische Modulatoren 17.1 und 17.2. Die akustooptischen Modulatoren 17.1, 17.2 werden mittels zugeordneter Modulator-Treiber 16.1,16.2 mit geringfügig unterschiedlichen Frequenzen (z. B. 500 kHz) angesteuert, wodurch eine Frequenzverschiebungbeider Teilstrahlenzur heterodyn-interferometrischen Auswertung erzwungen wird. In einer anderen Ausführungsform kann auch nur einer der Teilstrahlen 3,4 durch einen akustooptischen Modulator hindurchlaufen. Im weiteren Verlauf durchlaufen beide Teilstrahlen 3,4 die beiden akustooptischen Deflektoren 8,9 parallel versetzt. Die beiden akustooptischen Deflektoren 8,9 werden hierbei mit identischem Signal mittels eines Deflektor-Treibers 12 gesteuert, und dadurch werden die beiden Teilstrahlen 3,4 jeweils parallel, im Takt des Steuersignals, verschoben und auf jeweils zugeordnete Retrogitter 10,10' gerichtet, von denen sie zurückgebeugt werden. Die beiden Retrogitter sind so gekippt, daß die gleichzeitige lineare Verschiebung der Teilstrahlen durch die akustooptischen Deflektoren 8,9 eine gegenläufige Modulation der Laufzeit bewirkt. Außerdem sind die Retrogitter 10,10' so angeordnet, daß für beide Teilstrahlen 3,4 die optische Wegdifferenz entsprechend dem Ausführungsbeispiel gemäß Fig. 1 entsteht. Auch hierbei werden die beiden Teilstrahlen 3,4 nach Zurücklaufen über die Kompensationsgitter C1, C2 in dem ersten Strahlteiler ST1 überlagert, wobei sie infolge der Wegdifferenz nicht interferieren, und als Zwischenstrahl 5 in die Demodulations-Interferometeranordnung geleitet, die vorzugsweise als Meßsonde ausgebildet ist.

Auch hierbei sind das Kompensationsgitter C1 und das zugeordnete Retrogitter 10 einerseits und das weitere Kompensationsgitter C2 und das weitere Retrogitter 10' andererseits parallel zueinander angeordnet, wobei jedoch die beiden Paare entgegengesetzt, aber unter gleichem Winkel bezüglich der parallel austretenden bzw. einfallenden Teilstrahlen 3,4 gekippt sind.

Mit den beschriebenen Maßnahmen ergibt sich ohne mechanisch bewegte Teile eine Hohe Meßgenauigkeit, wobei der Aufbau insbesondere hinsichtlich der zu handhabenden Meßsonde, die lediglich die Bauteile der Demodulations-Interferometeranordnung aufweist, äußerst kompakt ist.

## Patentansprüche

1. Interferometrische Meßvorrichtung zur Formvermessung an rauhen Oberflächen eines Meßobjekts (7) mit einer Strahlungserzeugungseinheit (1), die eine kurzkohärente Eingangsstrahlung abgibt, mit einer Strahlteilervorrichtung (ST1, ST2), zum Bilden eines Referenzstrahls (4), der auf eine Vorrichtung (8,9) mit einem reflektierenden Element (10) zum periodischen Ändern des Lichtwegs gerichtet ist, und eines Meßstrahls (18), der auf das Meßobjekt (7) gerichtet ist, mit einem Überlagerungselement (ST2), an dem der von dem Meßobjekt (18) und der von der Vorrichtung (8,9,10) kommende Referenzstrahl (4) zur Interferenz gebracht werden, und mit einem Photodetektor (11), der die interferierte Strahlung aufnimmt und einer Auswerteeinrichtung (13) zuführt,
wobei ferner
eine Modulations-Interferometeranordnung (MI) vorgesehen ist, die derart aufgebaut ist, daß mit einem ersten Strahlteiler (ST1) der Strahlteilervorrichtung außer dem Referenzstrahl (4) ein zweiter Teilstrahl (3) gebildet wird,
die Vorrichtung (8,9,10) zum Ändern des Lichtwegs eine zumindest im Strahlengang des Referenzstrahls (4) angeordnete parallelverschiebende Anordnung (8,9) und das reflektierende Element ein Retrogitter (10) ist,
im Strahlengang des Referenzstrahls vor der parallelverschiebenden Anordnung (8,9) ein Kompensationsgitter (C1) angeordnet ist, an dem der Referenzstrahl (4) sowohl vor als auch nach dem Durchgang durch die parallelverschiebende Anordnung (8,9) gebeugt wird,
im Strahlengang des zweiten Teilstrahls (3) ein gleiches Paar wie im Strahlengang des Referenzstrahls (4) aus einem weiteren Kompensationsgitter (C2) und einem diesem nachgeordneten weiteren Retrogitter (10') angeordnet ist, wobei die optischen Weglängen der so gebildeten beiden Arme für den Referenzstrahl (4) und den zweiten Teilstrahl (3) der Modulations-Interferometeranordnung (MI) eine Differenz größer als die Kohärenzlänge aufweisen,
der über das Kompensationsgitter (C1) zurückgeführte Referenzstrahl (4) und der über das weitere Kompensationsgitter (C2) zurückgeführte zweite Teilstrahl (3) zu einem Zwischenstrahl (5) zusammengeführt werden, und
eine Demodulations-Interferometeranordnung (DI) vorgesehen ist, die derart aufgebaut ist,
daß der Zwischenstrahl (5) in zwei weitere Arme der Demodulations-Interferometeranordnung (DI) mittels eines weiteren Strahlteilers (ST2) aufgeteilt wird, wobei der eine Arm von einem Spiegel (SP3) und der andere Arm von der Oberfläche des Meßobjekts (7) abgeschlossen ist und die beiden weiteren Arme die gleiche Wegdifferenz aufweisen wie die Arme der Modulations-Interferometeranordnung (MI), und
daß die an dem Spiegel (3) und der Oberfläche des Meßobjekts (7) zurückgelenkten Strahlen an dem Überlagerungselement (ST2) zur Interferenz gebracht werden.

2. Meßvorrichtung nach Anspruch 1,
bei der
die parallelverschiebende Anordnung eine im Strahlengang angeordnete akustooptische Deflektoreinrichtung (8,9) aufweist, und
die Deflektoreinrichtung (8,9) frequenzmoduliert angesteuert ist und in bezug auf den ankommenden Referenzstrahl (4) sowie auf das Reflexionsgitter (10) derart angeordnet ist, daß der zu dem Überlagerungselement (ST2) geführte Referenzstrahl (4) durch seine Ablenkung in der Deflektoreinrichtung (8,9) die Änderung seines Lichtwegs erfährt.

3. Meßvorrichtung nach Anspruch 2,
bei der
die Gitterkonstante des Kompensationsgitters (C1) und des zweiten Kompensationsgitters (C2) zweimal so groß ist wie die Gitterkonstante des Retrogitters (10) bzw. des weiteren Retrogitters (10').

4. Meßvorrichtung nach Anspruch 2 oder 3,
bei der
das Kompensationsgitter (C1) und das Retrogitter (10) sowie das weitere Kompensationsgitter (C2) und das weitere Retrogitter (10') jeweils parallel zueinander angeordnet sind.

5. Meßvorrichtung nach einem der vorhergehenden Ansprüche,
bei der
die Kompensationsgitter (C1,C2) reflektierend ausgebildet sind, und im Strahlengang des Referenzstrahls (4) zwischen dem ersten Strahlteiler (ST1) und den Kompensationsgittern (C1,C2) jeweils ein Spiegel (SP1,SP2) angeordnet ist, mit dem der Referenzstrahl (4) bzw. der zweite Teilstrahl (3) auf dem Hinweg auf das zugehörige Kompensationsgitter (C1,C2) und auf seinem Rückweg auf den Strahlteiler (ST1) gerichtet ist, der den Zwischenstrahl (5) erzeugt.

6. Meßvorrichtung nach einem der vorhergehenden Ansprüche,
bei welcher
der weitere Strahlteiler (ST2) gleichzeitig das Überfagerungselement bildet.

7. Meßvorrichtung nach einem der vorhergehenden Ansprüche,
bei der
die Demodulations-Interferometeranordnung (DI) über einen Lichtleiter (19) mit der Modulations-Interferometeranordnung (MI) gekoppelt ist.

8. Meßvorrichtung nach einem der vorhergehenden Ansprüche,
bei welcher
der Zwischenstrahl (5) am Eingang der Demodulations-Interferometeranordnung (DI) durch eine Fernrohranordnung zu einem breiten Lichtstrahl aufgeweitet wird und
der Photodetektor (11) als CCD-Kamera ausgebildet ist.

9. Meßvorrichtung nach einem der vorhergehenden Ansprüche, bei der
ein Aufbau für eine an sich bekannte heterodyn-interferometrische Auswertung vorhanden ist, wobei eine Einrichtung zur Frequenzverschiebung zwischen den interferierenden Strahlen vorgesehen ist.

10. Meßvorrichtung nach einem der vorhergehenden Ansprüche,
bei der
die parallelverschiebende Anordnung (8,9) nur in dem den Referenzstrahl (4) führenden Arm der Modulations-Interferometeranordnung (MI) angeordnet ist.

11. Meßvorrichtung nach einem der Ansprüche 1 bis 9,
bei der
die parallelverschiebende Anordnung (8,9) in beiden Armen der Modulations-Interferometeranordnung (MI) derart angeordnet ist, daß sie sowohl auf dem Hinweg als auch auf dem Rückweg von dem Referenzstrahl (4) und von dem zweiten Teilstrahl (3) durchlaufen wird.

12. Meßvorrichtung nach Anspruch 11,
bei der
das Retrogitter (10) für den Referenzstrahl (4) und das weitere Retrogitter (10') für den zweiten Teilstrahl (3) so gekippt sind, daß die gleichzeitige Verschiebung des Referenzstrahls (4) und des zweiten Teilstrahls (3) eine gegenläufige Modulation ihrer Laufzeit bewirkt, und bei der
die beiden Retrogitter (10,10') so angeordnet sind, daß für den Referenzstrahl (4) und den zweiten Teilstrahl (3) die optische Wegdifferenz entsteht.

13. Meßvorrichtung nach anspruch 11 oder 12,
bei der
zwischen den beiden Kompensationsgittern (C1,C2) und der parallelverschiebenden Anordnung jeweils ein akustooptischer Modulator (17.1,17.2) angeordnet ist und bei der
die akustooptischen Modulatoren (17.1, 17.2) zum Erzeugen einer Frequenzverschiebung des Referenzstrahls (4) und des zweiten Teilstrahls (3) mit geringfügig unterschiedlicher Frequenz mittels zugeordneter Modulator-Treiber (16.1,16.2) angesteuert werden.

14. Meßvorrichtung nach Anspruch 11 oder 12,
bei der
daß nur ein akustooptischer Modulator in einem der beiden Arme der Modulations-Interferometeranordnung (MI) auf der den Retrogittern (10, 10') abgewandten Seite der parallelverschiebenden Anordnung vorgesehen ist.

## Claims

1. Interferometric measuring device for form measurement on rough surfaces of a measurement object (7), having a radiation production unit (1) which emits short-coherent input radiation, having a beam splitter device (ST1, ST2) for forming a reference beam (4) which is directed at a device (8, 9) with a reflective element (10) for periodically changing the light path, and of a measurement beam (18) which is directed at the measurement object (7), having a superimposition element (ST2) at which the measurement beam (18) coming from the measurement object (7) and the reference beam (4) coming from the device (8, 9, 10) are caused to interfere, and having a photodetector (11) which records the interfering radiation and feeds it to an evaluation device (13),
in which case, furthermore,
a modulation interferometer arrangement (MI) is provided which is designed in such a way that apart from the reference beam (4) a second component beam (3) is formed with the aid of a first beam splitter (ST1) of the beam splitter device,
the device (8, 9, 10) for changing the light path is a parallel-shifting arrangement (8, 9) arranged at least in the beam path of the reference beam (4), and the reflective element is a retrograting (10),
arranged in the beam path of the reference beam upstream of the parallel-shifting arrangement (8, 9) is a compensation grating (C1) at which the reference beam (4) is diffracted both before and after passing through the parallel-shifting arrangement (8, 9),
arranged in the beam path of the second component beam (3), as in the beam path of the reference beam (4), is an identical pair composed of a further compensation grating (C2) and a further retrograting (10'), arranged downstream of the latter, the optical path lengths of the two arms thus formed for the reference beam (4) and the second component beam (3) of the modulation interferometer arrangement (MI) having a difference greater than the coherence length,
the reference beam (4) returned via the compensation grating (C1), and the second component beam (3) returned via the further compensation grating (C2) are combined to form an intermediate beam (5) and
a demodulation interferometer arrangement (DI) is provided which is arranged in such a way
that the intermediate beam (5) is split up into two further arms of the demodulation interferometer arrangement (DI) by means of a further beam splitter (ST2), with one arm being terminated by a mirror (SP3) and the other arm being terminated by the surface of the measurement object (7), and the two further arms have the same path difference as the arms of the modulation interferometer arrangement (MI), and
that the beams returned at the mirror (3) and the surface of the measurement object (7) are caused to interfere at the superimposition element (ST2).

2. Measuring device according to Claim 1, in which the parallel-shifting arrangement has an acousto-optical deflector device (8, 9) arranged in the beam path, and
the deflector device (8, 9) is driven such that it is frequency-modulated and, with respect to the incoming reference beam (4) and to the reflection grating (10), is arranged in such a manner that the reference beam (4) passed to the superimposition element (ST2) experiences a change in its light path due to this deflection in the deflector device (8, 9).

3. Measuring device according to Claim 2, in which the grating constant of the compensation grating (C1) and of the second compensation grating (C2) is twice as great as the grating constant of the retrograting (10) and of the second retrograting (10'), respectively.

4. Measuring device according to Claim 2 or 3, in which the compensation grating (C1) and the retrograting (10) as well as the further compensation grating (C2) and the further retrograting (10') are respectively arranged parallel to one another.

5. Measuring device according to one of the preceding claims, in which the compensation gratings (C1, C2) are of reflective design, and there is respectively arranged in the beam path of the reference beam (4) between the first beam splitter (ST1) and the compensation gratings (C1, C2) a mirror (SP1, SP2) with which the reference beam (4) and the second component beam (3), respectively, are directed on the forward path at the associated compensation grating (C1, C2), and on its return path at the beam splitter (ST1), which generates the intermediate beam (5).

6. Measuring device according to one of the preceding claims, in which the further beam splitter (ST2) at the same time forms the superimposition element.

7. Measuring device according to one of the preceding claims, in which the demodulation interferometer arrangement (DI) is coupled to a light guide (19) by means of the modulation interferometer arrangement (MI).

8. Measuring device according to one of the preceding claims, in which at the input of the demodulation interferometer arrangement (DI) the intermediate beam (5) is expanded by a telescope arrangement to form a wide light beam, and the photodetector (11) is designed as a CCD camera.

9. Measuring device according to one of the preceding claims, in which there is a design for a heterodyne interferometric evaluation, known per se, a device being provided for frequency shifting between the interfering beams.

10. Measuring device according to one of the preceding claims, in which the parallel-shifting arrangement (8, 9) is arranged only in that arm of the modulation interferometer arrangement (MI) which guides the reference beam (4).

11. Measuring device according to one of Claims 1 to 9, in which the parallel-shifting arrangement (8, 9) is arranged in both arms of the modulation interferometer arrangement (MI) in such a way that it is traversed both on the forward path and on the return path by the reference beam (4) and by the second component beam (3).

12. Measuring device according to Claim 11, in which the retrograting (10) for the reference beam (4), and the further retrograting (10') for the second component beam (3) are tilted such that the simultaneous displacement of the reference beam (4) and of the second component beam (3) effects an oppositely directed modulation of their transit time, and in which the two retrogratings (10, 10') are arranged so as to produce the optical path difference for the reference beam (4) and the second component beam (3).

13. Measuring device according to Claim 11 or 12, in which an acousto-optical modulator (17.1, 17.2) is respectively arranged between the two compensation gratings (C1, C2) and the parallel-shifting arrangement, and in which the acousto-optical modulators (17.1, 17.2) for generating a frequency shift of the reference beam (4) and of the second component beam (3) are driven at a slightly different frequency by means of assigned modulator drivers (16.1, 16.2).

14. Measuring device according to Claim 11 or 12, in which only one acousto-optical modulator is provided in one of the two arms of the modulation interferometer arrangement (MI) on the side of the parallel-shifting arrangement averted from the retrogratings (10, 10').

## Revendications

1. Dispositif de mesure interférométrique pour le mesurage de formes sur des surfaces rugueuses d'un objet de mesure (7), comportant une unité de génération de faisceau (1), qui émet un faisceau d'entrée de cohérence courte, un dispositif séparateur de faisceau (ST1, ST2), permettant de former un faisceau de référence (4) dirigé sur un dispositif (8, 9) comportant un élément réfléchissant (10) destiné à la modification périodique de la trajectoire lumineuse, et un faisceau de mesure (18) dirigé sur l'objet de mesure (7), avec un élément de superposition (ST2) au niveau duquel interfèrent entre eux le faisceau de référence (4) provenant de l'objet de mesure (18) et celui provenant du dispositif (8, 9, 10), et comportant un photo-détecteur (11) qui reçoit le faisceau interféré et le dirige vers un dispositif d'exploitation (13),
dans lequel en outre
un dispositif d'interférométrie de modulation (MI) est conçu de telle sorte qu'un premier séparateur de faisceau (ST1) du dispositif séparateur de faisceau, forme en plus du faisceau de référence (4) un deuxième faisceau partiel (3),
le dispositif (8, 9, 10) permettant de modifier la trajectoire lumineuse est un dispositif de déplacement parallèle disposé au moins dans le chemin optique du faisceau de référence (4) et l'élément réfléchissant est une rétro-grille (10),
une grille de compensation (C1) disposée dans le chemin optique du faisceau de référence avant le dispositif de déplacement parallèle (8, 9), dévie le faisceau de référence (4), à la fois avant et après le passage à travers le dispositif de déplacement parallèle (8, 9),
dans le chemin optique du deuxième faisceau partiel (3) est disposé un couple d'éléments identique à celui disposé dans le chemin optique du faisceau de référence (4), composé d'une autre grille de compensation (C2) et d'une rétro-grille (10') disposée en aval de celle-ci, les longueurs de trajectoire optiques des deux bras ainsi formés pour le faisceau de référence (4) et le deuxième faisceau partiel (3) du dispositif d'interférométrie de modulation (MI) présentant une différence supérieure à la longueur de cohérence,
le faisceau de référence (4) renvoyé par le biais de la grille de compensation (C1) et le deuxième faisceau partiel (3) renvoyé par le biais de la grille de compensation (C2) sont assemblés pour former un faisceau intermédiaire (5), et
un dispositif d'interférométrie de démodulation (DI) est configuré de telle sorte que
le faisceau intermédiaire (5) est divisé en deux autres bras du dispositif d'interférométrie de démodulation (DI) au moyen d'un autre séparateur de faisceau (ST2), le premier bras étant terminé par un miroir (SP3) et l'autre bras étant terminé par la surface de l'objet de mesure (7), les deux autres bras présentant la même différence de trajectoire que les bras du dispositif d'interférométrie de modulation (MI), et
les faisceaux renvoyés au niveau du miroir (3) et de la surface de l'objet de mesure (7) interfèrent entre eux au niveau de l'élément de superposition (ST2).

2. Dispositif de mesure selon la revendication 1,
dans lequel
le dispositif de déplacement parallèle présente un dispositif déflecteur (8, 9) acoustique-optique disposé dans chemin optique, et
le dispositif déflecteur (8, 9) est commandé par modulation de fréquence et est disposé par rapport au faisceau de référence (4) incident et par rapport à la grille réfléchissante (10) de telle sorte que le faisceau de référence (4) envoyé vers l'élément de superposition (ST2), en raison de sa diffraction dans le dispositif déflecteur (8, 9), subit une modification de sa trajectoire lumineuse.

3. Dispositif de mesure selon la revendication 2,
dans lequel
la constante de grille de la grille de compensation (C1) et de la deuxième grille de compensation (C2) est deux fois plus importante que la constante de grille de la rétro-grille (10) ou de l'autre rétro-grille (10').

4. Dispositif de mesure selon la revendication 2 ou 3,
dans lequel
la grille de compensation (C1) et la rétro-grille (10) ainsi que l'autre grille de compensation (C2) et l'autre rétro-grille (10') sont respectivement disposées parallèlement les unes par rapport aux autres.

5. Dispositif de mesure selon l'une des revendications précédentes,
dans lequel
les grilles de compensation (C1, C2) sont configurées de façon réfléchissante, et
dans le chemin optique du faisceau de référence (4), entre le premier séparateur de faisceau (ST1) et les grilles de compensation (C1, C2), est respectivement disposé un miroir (SP1, SP2), qui renvoie le faisceau de référence (4) ou le deuxième faisceau partiel (3) à l'aller vers la grille de compensation (C1, C2) associée et au retour vers le séparateur de faisceau (ST1) qui génère le faisceau intermédiaire (5).

6. Dispositif de mesure selon l'une des revendications précédentes,
dans lequel
l'autre séparateur de faisceau (ST2) forme dans le même temps l'élément de superposition.

7. Dispositif de mesure selon l'une des revendications précédentes,
dans lequel
le dispositif d'interférométrie de démodulation (DI) est relié au dispositif d'interférométrie de modulation (MI) par le biais d'un conducteur de lumière (19).

8. Dispositif de mesure selon l'une des revendications précédentes,
dans lequel
le faisceau intermédiaire (5) est élargi, à l'entrée du dispositif .. d'interférométrie de démodulation (DI), par un dispositif de télescope, afin de former un faisceau lumineux large, et le photo-détecteur (11) est une caméra CCD.

9. Dispositif de mesure selon l'une des revendications précédentes,
dans lequel
une structure est prévue pour une exploitation interférométrique hétérodyne connue en soi, avec un dispositif pour le décalage de fréquence entre les faisceaux qui interfèrent entre eux.

10. Dispositif de mesure selon l'une des revendications précédentes,
dans lequel
le dispositif de déplacement parallèle (8, 9) est disposé uniquement dans le bras du dispositif d'interférométrie de modulation (MI) conduisant le faisceau de référence (4).

11. Dispositif de mesure selon l'une des revendications 1 à 9,
dans lequel
le dispositif de déplacement parallèle (8, 9) est disposé dans les deux bras du dispositif d'interférométrie de modulation (MI), de telle sorte qu'il est traversé à la fois à l'aller et au retour par le faisceau de référence (4) et par le deuxième faisceau partiel (3).

12. Dispositif de mesure selon la revendication 11,
dans lequel
la rétro-grille (10) pour le faisceau de référence (4) et l'autre rétro-grille (10') pour le deuxième faisceau partiel (3) sont basculées de telle sorte que le décalage simultané du faisceau de référence (4) et du deuxième faisceau partiel (3) provoque une modulation opposée de leur durée, et les deux rétro-grilles (10, 10') sont disposées de telle sorte que pour le faisceau de référence (4) et le deuxième faisceau partiel (3), on obtient la différence de trajectoire optique.

13. Dispositif de mesure selon la revendication 11 ou 12,
dans lequel
entre les deux grilles de compensation (C1, C2) et le dispositif de déplacement parallèle est respectivement disposé un modulateur acoustique-optique (17.1, 17.2), et
les modulateurs acoustiques-optiques (17.1, 17.2), pour la génération d'un décalage de fréquence du faisceau de référence (4) et du deuxième faisceau partiel (3), sont commandés avec une fréquence légèrement différente au moyen de pilotes de modulateur associés (16.1, 16.2).

14. Dispositif de mesure selon la revendication 11 ou 12,
dans lequel
un seul modulateur acoustique-optique est prévu dans l'un des deux bras du dispositif d'interférométrie de modulation (MI), sur le côté du dispositif de déplacement parallèle opposé aux rétro-grilles (10, 10').
